# EUROPEAN PATENT SPECIFICATION

(11) **EP 2 730 012 B1**
(45) Date of publication and mention of the grant of the patent: **24.10.2018**
(21) Application number: 12807899.5
(22) Date of filing: 06.07.2012
(51) Int. Cl.: H02J 50/12, H02J 5/00, H01F 38/14

(54) **AN INDUCTIVELY COUPLED POWER TRANSFER RECEIVER**
INDUKTIV GEKOPPELTER STROMÜBERTRAGUNGSEMPFÄNGER
RÉCEPTEUR DE TRANSFERT D'ÉNERGIE À COUPLAGE INDUCTIF

(30) Priority: 07.07.2011 NZ 59394611; 07.07.2011 US 201161505126 P
(43) Date of publication of application: 14.05.2014
(73) Proprietor: Apple Inc., Cupertino CA 95014 (US)
(72) Inventor: ROBERTSON, Daniel, Cupertino, CA 95014 (US); BHARGAVA, Kunal, Cupertino, CA 95014 (US); HU, Patrick Aiguo, Cupertino, CA 95014 (US)
(74) Representative: Barnfather, Karl Jon
(86) International application number: PCT/NZ2012/000120
(87) International publication number: WO 2013/006068

(56) References cited:
- WO-A1-2010/093997
- US-A1- 2010 110 741
- US-A1- 2011 053 500
- US-A1- 2011 090 723

## Description

### FIELD OF THE INVENTION

The present invention is in the technical field of near field Inductively Coupled Power Transfer systems (ICPT). More particularly, although not exclusively, the present invention relates to a power receiver including a variable tuning impedance.

### BACKGROUND OF THE INVENTION

Contactless power systems typically consist of a power transmitter that generates an alternating magnetic field and one or more power receivers coupled to the generated magnetic field to provide a local power supply. These contactless power receivers are within proximity, but electrically isolated from, the power transmitter. A contactless power receiver includes a power receiving coil in which a voltage is induced by the alternating magnetic field generated by the power transmitter, and supplies power to an electric load. The power receiving coil may be tuned by adjusting a reactive component to increase power transfer capacity of the system.

One of the issues with contactless power receivers is their low efficiency when they are lightly loaded, for example when a motor powered by a power receiver is idle while it awaits a command from a control system. This can be overcome by implementing power flow control via a power controller between the power receiving coil and the load.

One implementation of a power controller uses a shorting switch as part of the power receiving circuit to decouple the power receiving coil from the load as required. This approach is described in the specification of US patent 5,293,308 assigned to Auckland UniServices Limited and is referred to as "shorting control". Although this approach addresses the power flow control problem from the power receiving coil to the load, the shorting switch can cause large conduction losses, especially at light loads, because the power receiving coil is nearly always shorted under no load or light load conditions. This approach also requires a bulky and expensive DC inductor and generates significant electromagnetic interference.

Another problem with contactless power systems is frequency variations due to changes in load conditions and other circuit parameters. This can cause changes in the power receiving coil in terms of the induced voltage magnitude and short circuit current, which affect the power transfer capacity of the system. This is particularly a problem in fixed or passively tuned contactless power receivers.

One approach described in US patent specification US2007/109708A1 & US 7,382,636B2 is to dynamically tune or de-tune the power receiving coil by varying the effective capacitance or inductance of the power receiver. This enables the contactless power receiver to compensate for frequency drifts caused by parameter changes. The effective capacitance or inductance is varied by employing two semiconductor switches in series with the capacitor or inductor. A means of sensing power receiving coil current magnitude and phase is required to enable soft switching of the variable capacitor or resistor. By implementing dynamic tuning not only can frequency drifts be compensated for but much higher quality factors (Q>10) can be realized than in passively tuned systems (normally Q<6) as the power receiving coil resonant frequency can be fine tuned. Higher quality factor increases the power transfer capacity of the systems. However, this approach requires a power receiving coil sensor and complex control circuitry.

In order to miniaturize the contactless power pickup circuitry it is beneficial to eliminate the power receiving coil sensor which is particularly complicated at high frequencies. This implementation causes excessively high currents or voltages because either the inductor current can be switched off or the charged capacitor can be shorted during the switching process. The resulting switching transients contribute to EMI, unreliability of switches, and reduces the system power efficiency due to excessive power losses. In the worst cases it can cause system failure.

In the applicants prior application WO/2010/005324 there is disclosed a power receiver including a variable reactance in the main current path employing a semiconductor device operating in linear mode to achieve tuning. This arrangement only requires a relatively simple control circuit but incurs losses due to the semiconductor device being in the main current path. It may also require a bulky DC inductor or suffer reduced output power capacity. Further the peak voltages across the semiconductor device may be relatively high US 2011/0090723 A1 discloses a contactless power receiver with a dynamically tuned coil.

It is an object of the present invention to provide improved power receiver topologies which will ameliorate one or more of the disadvantages suffered by existing systems, or which will at least provide the public with a useful alternative.

### SUMMARY OF THE INVENTION

Aspects of the invention are disclosed in independent claim 1.

### BRIEF DESCRIPTION OF THE DRAWINGS

The accompanying drawings which are incorporated in and constitute part of the specification, illustrate embodiments of the invention and, together with the general description of the invention given above, and the detailed description of embodiments given below, serve to explain the principles of the invention.
- **Figure 1**: shows a block diagram of an ICPT power receiver;
- **Figure 2**: shows an ICPT power receiver employing tuning by way of a capacitor in series with a semiconductor device;
- **Figure 3**: shows an ICPT power receiver employing tuning by way of a capacitor in parallel with a semiconductor device;
- **Figure 4**: shows an ICPT power receiver employing tuning by way of a capacitor in series with a semiconductor device and an inductor in parallel with the semiconductor device;
- **Figure 5**: shows an ICPT power receiver employing tuning by way of a capacitor in series with an inductor arranged in parallel with a semiconductor device;
- **Figure 6**: shows an ICPT power receiver employing tuning by way of a plurality of capacitors each in series with a respective semiconductor device;
- **Figure 7**: shows an ICPT power receiver employing tuning by way of an inductor arranged in series with a semiconductor device;
- **Figure 8**: shows an ICPT power receiver employing tuning by way of an inductor arranged in series with a semiconductor device both in parallel with an capacitance; and
- **Figure 9**: shows a full circuit diagram for one implementation of an ICPT power receiver based on the topology shown in figure 2.

### DETAILED DESCRIPTION OF EMBODIMENTS OF THE INVENTION

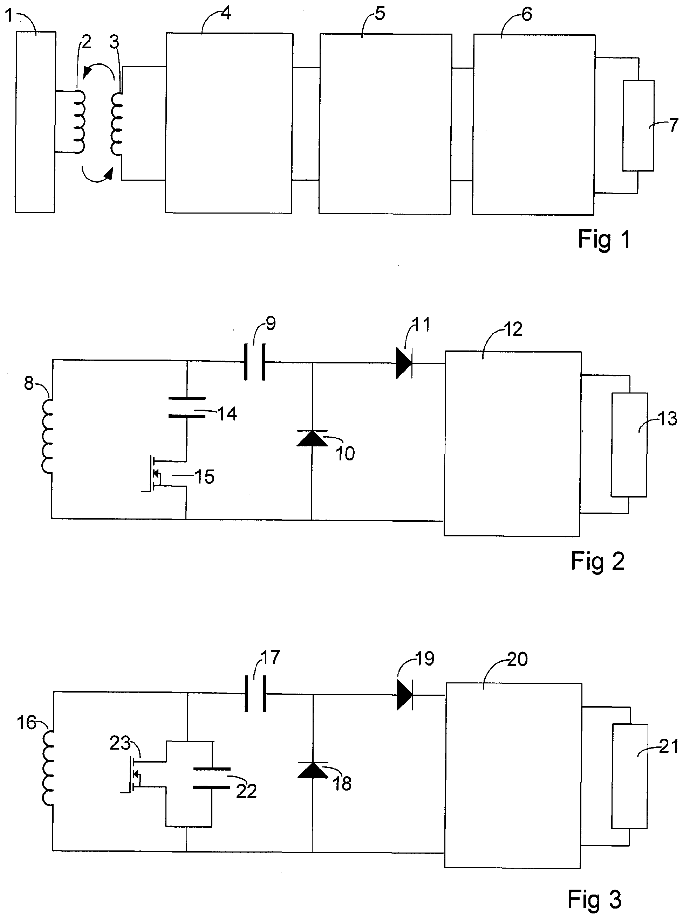

Referring to figure 1 a block diagram of an inductively coupled power transfer system is shown. A power transmitter 1 drives a power transmitting coil 2 to generate an alternating magnetic field. The power receiver includes a tunable circuit 4 including a power receiving coil 3 and a power supply circuit including a rectifier 5 and a power control circuit 6. The power receiving coil 3 is inductively coupled with the power transmitting coil 2 and the power supply circuit regulates power flow to load 7.

Figure 2 shows a power receiver employing a variable impedance according to a first embodiment. The primary elements of the tunable circuit in this embodiment are power receiving coil 8 and capacitor 9 forming a series resonant circuit. The output of the tunable circuit is supplied via a half bridge rectifier formed by diodes 10 and 11 to power control circuit 12 which supplies power to load 13. In this embodiment the tunable circuit is tuned by way of capacitor 14 in series with a semiconductor device in the form of MOSFET 15. MOSFET 15 is driven by power control circuit 12 to provide a desired output voltage across load 13. In this embodiment MOSFET 15 may be driven in linear mode to provide a continuously variable impedance in conjunction with capacitor 14 to tune the tunable circuit. Capacitor 14 is typically much smaller than capacitor 9. The power dissipation of MOSFET 15 may be traded off against the control range for a given application.

The topology employed in figure 2 confers a number of advantages:
- The variable tuning impedance formed by capacitor 14 and MOSFET 15 is not in the main current path and so loading on MOSFET 15 and resultant losses are reduced.
- Capacitor 9 and diodes 10 and 11 act as a voltage doubler enabling MOSFET 15 to have a lower voltage rating.
- Driving MOSFET 15 is simplified as it and the power control circuit may share a common ground.
- The variable impedance (14 and 15) is in parallel with a relatively low impedance branch (i.e., 9, 10, 11, 12 and 13), hence the voltage across the variable impedance cannot exceed the output voltage in the steady state.
- The load 13 sees a series tuned circuit as a voltage source and hence minimal control effort is required to account for load changes (This is not the case where a current source (parallel tuned) circuit is seen by the load).

Figure 3 shows a power receiver employing a variable impedance in the form of a capacitor in parallel with a semiconductor device. As per figure 2 the power receiver includes a power receiving coil 16 and capacitor 17 forming a series resonant circuit. The output of the tunable circuit is supplied via a half bridge rectifier formed by diodes 18 and 19 to power control circuit 20 which supplies power to load 21. In this embodiment the tunable circuit is tuned by way of capacitor 22 in series with a semiconductor device in the form of MOSFET 23. MOSFET 23 is driven by power control circuit 20 to provide a desired output voltage across load 21. In this embodiment MOSFET 23 may be driven in linear mode to provide a continuously variable impedance in parallel with capacitor 22 to tune the tunable circuit by effectively providing a variable resistance across capacitor 22. This topology enables control across the entire voltage output range but requires a more highly rated MOSFET. Capacitor 22 could be eliminated to provide essentially resistive tuning.

Thus for the circuit of figure 2 turning on MOSFET 15 provides increased tuning capacitance in parallel with power receiving coil 8 whilst in the circuit of figure 3 turning on MOSFET 23 reduces the effect of tuning capacitance 22 whilst adding resistance. The best topology will depend upon the particular application.

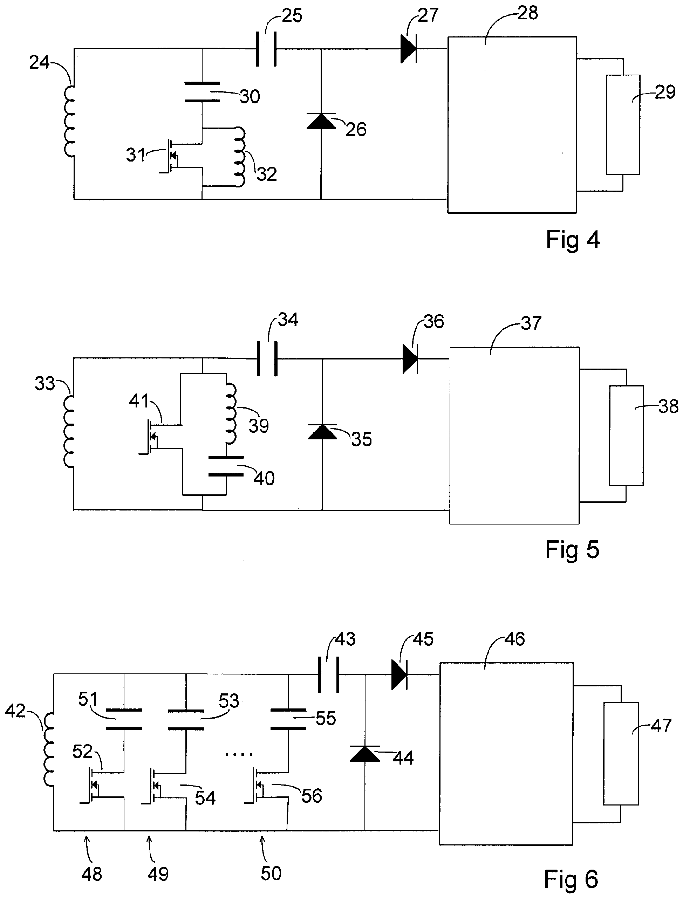

Figure 4 shows an embodiment that is a variant of the embodiment shown in figure 2 with an inductance added in parallel with the MOSFET. As per figure 2 the power receiver includes a power receiving coil 24 and capacitor 25 forming a series resonant circuit. The output of the tunable circuit is connected to a half bridge rectifier formed by diodes 26 and 27 to power control circuit 28 which supplies power to load 29. In this embodiment the tunable circuit is tuned by way of a semiconductor device in the form of MOSFET 31 in parallel with inductance 32, the pair of which is in series with capacitor 30. MOSFET 31 is driven by power control circuit 28 to provide a desired output voltage across load 29. In this embodiment turning on MOSFET 31 effectively increases the effect of capacitance 30 and reduces the effect of inductance 32.

Figure 5 shows a power receiver employing a variable impedance in the form of a capacitor in series with an inductor both in parallel with a semiconductor device. As per figure 2 the power receiver includes a power receiving coil 33 and capacitor 34 forming a series resonant circuit. The output of the tunable circuit is supplied via a half bridge rectifier formed by diodes 35 and 36 to power control circuit 37 which supplies power to load 38. In this embodiment the tunable circuit is tuned by way of capacitor 40 in series with inductance 39 in parallel with a semiconductor device in the form of MOSFET 41. MOSFET 41 is driven by power control circuit 20 to provide a desired output voltage across load 38. This arrangement allows tuning by way of variation of capacitive and inductive components. This topology enables control across the entire voltage output range but requires a more highly rated MOSFET.

Figure 6 shows a power receiver employing a plurality of variable impedances. As per figure 2 the power receiver includes a power receiving coil 42 and capacitor 43 forming a series resonant circuit. The output of the tunable circuit is supplied via a half bridge rectifier formed by diodes 44 and 45 to power control circuit 46 which supplies power to load 47. In this embodiment the tunable circuit is tuned by way of a plurality of variable impedances 48, 49 and 50. Variable impedance 48 is of the form of the variable impedance shown in figure 2 including capacitor 51 and MOSFET 52. Likewise variable impedances 49 and 50 consist of capacitors 53 and 55 and MOSFETs 54 and 56.

According to a preferred embodiment MOSFET 52 may be driven by power control circuit 46 to operate in linear mode whilst MOSFETs 56 and 54 may be driven in switched mode. Whilst only two switched impedances 49 and 50 are shown it will be appreciated from the following description that any desired number may be employed. In a preferred embodiment n switched variable impedances are employed with each having a value of 1/2ⁿ. In this way stepped values of capacitance may be switched in by the switched variable impedances 49 to 50 for coarse tuning whilst fine tuning may be achieved by operating MOSFET 52 in linear mode. Operating MOSFETs 54 and 56 in switched mode results in decreased losses from the semiconductor devices.

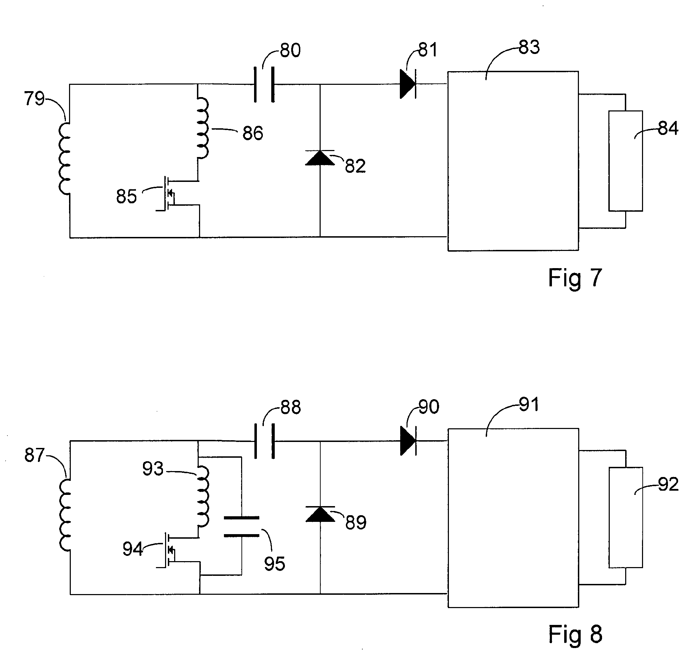

Figure 7 shows a power receiver employing a variable impedance in the form of an inductor in series with a semiconductor device. As per figure 2 the power receiver includes a power receiving coil 79 and capacitor 80 forming a series resonant circuit. The output of the tunable circuit is supplied via a half bridge rectifier formed by diodes 81 and 82 to power control circuit 83 which supplies power to load 84. In this embodiment the tunable circuit is tuned by way of inductance 86 in series with a semiconductor device in the form of MOSFET 85. MOSFET 85 is driven by power control circuit 83 to provide a desired output voltage across load 84.

Figure 8 shows a power receiver employing a variable impedance in the form of an inductor in series with a semiconductor device with a parallel capacitance. As per figure 2 the power receiver includes a power receiving coil 87 and capacitor 88 forming a series resonant circuit. The output of the tunable circuit is supplied via a half bridge rectifier formed by diodes 89 and 90 to power control circuit 91 which supplies power to load 92. In this embodiment the tunable circuit is tuned by way of inductance 93 in series with a semiconductor device in the form of MOSFET 94 in parallel with capacitance 95. MOSFET 94 is driven by power control circuit 91 to provide a desired output voltage across load 92.

In the above embodiments resistive elements may be added to the variable impedances for control linearity as required. A small value resistor can be added in series with the semiconductor device to make it switch on less sharply with increasing Vgs. The MOSFETs of the variable impedances could also be operated in switched mode and gain the benefits described above but require more complex sensing and drive circuits. The reactive component of the variable impedance could also be replaced with a diode which, although simple, would sacrifice losses for control range.

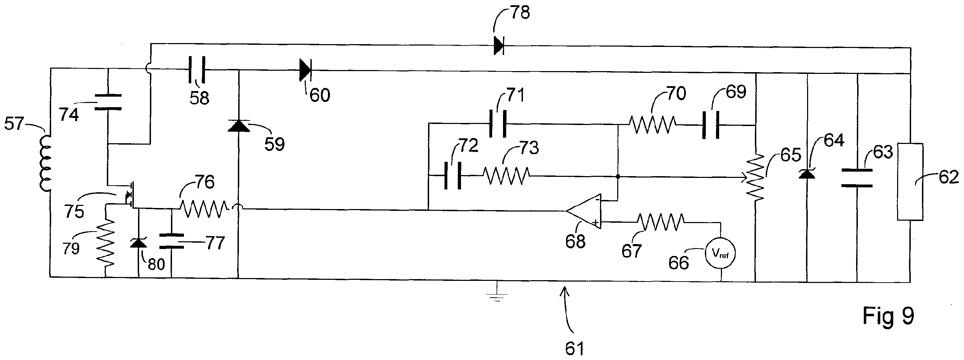

Figure 9 is a detailed circuit diagram showing a possible circuit realization of the topology shown in figure 2. Power receiving coil 57 and capacitor 58 form a series resonant circuit. The output of the tunable circuit is supplied via a half bridge rectifier formed by diodes 59 and 60 to power control circuit 61 which supplies power to load 62. The tunable circuit is tuned by way of the variable impedance formed by MOSFET 75 in series with capacitance 74. The power control circuit 61 includes an output smoothing capacitor 63 and Zener diode 64 and a feedback control circuit. The operational amplifier 68 supplies a drive signal to MOSFET 75 via a low pass filter formed by resistor 76 and capacitor 77. Resistor 79 reduces the sharpness of switching with increasing Vgs and diode 80 provides protection. The non-inverting terminal of operational amplifier 68 receives a reference voltage from a reference voltage source 66, such as a voltage regulator, via resistor 67. Variable resistor 65 acts as a voltage divider supplying a desired fraction of the output voltage to the inverting terminal of operational amplifier 68. Variable resistor 65 may be set to produce a desired output voltage across load 62. Capacitances 69, 71 and 72 and resistances 70 and 73 provide loop compensation. Thus the power control circuit 61 provides a voltage drive signal to MOSFET 75 to operate it in linear mode to tune the tunable circuit. It will be appreciated that a wide range of power control circuits may be employed and that this embodiment is given by way of non-limiting example.

The circuit shown in figure 9 shows an additional feature in the form of diode 78 which supplies transient power from the power receiving coil 57 at start up directly to the output of the power controller circuit 61. This limits the transient voltage present on the detuning switch and enables the required output voltage to be established more rapidly.

Exemplary values of components employed are given below:

| **Component** | **Value** |
|---|---|
| Power receiving coil 57 | 27µH |
| Capacitor 74 | 6.8nF |
| MOSFET 75 | IRF530 |
| Resistor 79 | 3.3Ω |
| Diode 80 | BZX84C12L |
| Capacitor 58 | 56nF |
| Resistor 76 | 22kΩ |
| Capacitor 77 | 6.8nF |
| Diodes 59, 60 and 78 | B540C |
| Capacitor 71 | 1nF |
| Capacitor 72 | 3.3nF |
| Resistor 73 | 10kΩ |
| Resistor 70 | 100Ω |
| Capacitor 69 | 6.8nF |
| Resistor 67 | 10kΩ |
| Potentiometer 65 | 44kΩ |
| TVS diode 64 | SMAJ33A |
| Capacitor 63 | 2.2µF |
| Operational amplifier 68 | LT1077 |
| Reference voltage source 68 | TL431ILPRPG (incl assoc comps for 8V ref) |

This power receiver implements power flow control and operates in an efficient manner at low loads as the power transfer capacity of the system is adjusted based on the device's power requirements. Due to the tuning impedance not being in the main current path the losses associated with the tuning semiconductor device may be reduced compared to prior art topologies.

Embodiments of the invention allow the bulky and expensive DC inductor of prior art receivers to be removed and are able to achieve high Q (where switched mode is employed) whilst the circuits may have a lower component count, form factor and design complexity as they do not require an additional bulky pick up coil sensor to soft switch the system and associated control circuitry (If a DC inductor were included the peak voltages present across the shunt regulator switch would be π times higher than the output voltage in the case where a half bridge rectifier is used).

The power receivers thus provide better power density, efficiency and range performance metrics as well as low losses and EMIs. The placement of the detuning circuit branch in parallel with the load branch minimizes the voltage that the detuning switch is exposed to, allowing lower voltage, higher performance and cheaper devices to be employed for the detuning switch.

By directing only a portion of the total load current through the semiconductor device of the variable impedance the requirement for a low Rds(on) is relieved. Start up overvoltage problems may be addressed by configuring the circuit to be fully detuned when the controller is off.

While the present invention has been illustrated by the description of the embodiments thereof, and while the embodiments have been described in detail, it is not intended to restrict or in any way limit the scope of the appended claims to such detail. Additional advantages and modifications will readily appear to those skilled in the art. Therefore, the invention in its broader aspects is not limited to the specific details, representative apparatus and method, and illustrative examples shown and described. Accordingly, departures may be made from such details without departure from the scope of the general inventive concept.

## Claims

1. An inductively coupled power transfer receiver including:
a. a tunable circuit including:
i. a parallel combination (24, 30, 31, 32) of a power receiving coil (24); and a first variable impedance (30, 31, 32) the first variable impedance (30, 31, 32) configured to tune the power receiving coil (24), wherein the first variable impedance (30, 31, 32) includes:
1. at least one reactive element (32); and
2. one or more semiconductor devices (31) for controlling the effective impedance of the at least one reactive element (32) thereby varying the impedance of the first variable inpedance (30, 31, 32); wherein the first variable impedance (30, 31, 32) comprises a second capacitance (30), the second capacitance (30) is connected in series with a first of the one or more semiconductor devices (31), and wherein the first of the one or more semiconductor devices (31) operates in linear mode; and
ii. a first capacitance (25) connected in series with the parallel combination (24, 30, 31, 32); and
b. a power supply circuit (28) which regulates power supplied to an output of the power supply circuit (28) by controlling the operation of the one or more semiconductor devices (31).

2. An inductively coupled power transfer receiver as claimed in claim 1 wherein the second capacitance (30) is smaller than the first capacitance (25).

3. An inductively coupled power transfer receiver as claimed in claim 1 wherein the first variable impedance (30,31,32) includes an inductance in parallel with the first semiconductor device (31).

4. An inductively coupled power transfer receiver as claimed in claim 1 wherein the first variable impedance (30,31,32) includes a second capacitance in parallel with the first semiconductor device (31).

5. An inductively coupled power transfer receiver as claimed in claim 1 wherein the first variable impedance (30,31,32) includes a capacitance and an inductor in parallel with the first semiconductor device (31).

6. An inductively coupled power transfer receiver as claimed in any one of the preceding claims including one or more auxiliary variable impedances.

7. An inductively coupled power transfer receiver as claimed in claim 6 wherein one of the auxiliary variable impedances includes a semiconductor switch controlled by the power supply circuit (28).

8. An inductively coupled power transfer receiver as claimed in claim 7 wherein the semiconductor switch is operated in switched mode.

9. An inductively coupled power transfer receiver as claimed in claim 6 including a plurality of auxiliary variable impedances.

10. An inductively coupled power transfer receiver as claimed in claim 9 wherein each auxiliary variable impedance includes a semiconductor switch operated in switched mode.

11. An inductively coupled power transfer receiver as claimed in claim 10 wherein the plurality of auxiliary variable impedances include capacitances of different values.

12. An inductively coupled power transfer receiver as claimed in claim 10 wherein the plurality of auxiliary variable impedances include capacitances of progressively smaller magnitudes of 1/2ⁿ where n is the number of auxiliary variable impedances.

13. An inductively coupled power transfer receiver as claimed in any preceding claim, wherein the power supply circuit (12) comprises a feedback control circuit for controlling the operation of the one or more semiconductor devices.

## Patentansprüche

1. Induktiv gekoppelter Leistungsübertragungsempfänger, beinhaltend:
a. eine abstimmbare Schaltung, beinhaltend:
i. eine parallele Kombination (24, 30, 31, 32) einer Leistungsempfangsspule (24); und
eine erste variable Impedanz (30, 31, 32), wobei die erste variable Impedanz (30, 31, 32) konfiguriert ist, um die Leistungsempfangsspule (24) abzustimmen, wobei die erste variable Impedanz (30, 31, 32) beinhaltet:
1. zumindest ein reaktives Element (32); und
2. eine oder mehrere Halbleitervorrichtungen (31) zum Steuern der effektiven Impedanz des zumindest einen reaktiven Elements (32), wodurch die Impedanz der ersten variablen Impedanz (30, 31, 32) variiert wird; wobei die erste variable Impedanz (30, 31, 32) eine zweite Kapazität (30) umfasst, wobei die zweite Kapazität (30) in Serie mit einer ersten der einen oder der mehreren Halbleitervorrichtungen (31) verbunden ist, und wobei die erste der einen oder der mehreren Halbleitervorrichtungen (31) in einem Linearmodus arbeitet; und
ii. eine erste Kapazität (25), die in Serie mit der parallelen Kombination (24, 30, 31, 32) verbunden ist; und
b. eine Leistungsversorgungsschaltung (28), welche eine Leistung, die an eine Ausgabe der Leistungsversorgungsschaltung (28) geliefert wird, reguliert, indem sie den Betrieb der einen oder der mehreren Halbleitervorrichtungen (31) steuert.

2. Induktiv gekoppelter Leistungsübertragungsempfänger nach Anspruch 1, wobei die zweite Kapazität (30) kleiner ist als die erste Kapazität (25).

3. Induktiv gekoppelter Leistungsübertragungsempfänger nach Anspruch 1, wobei die erste variable Impedanz (30, 31, 32) eine Induktivität beinhaltet, die mit der ersten Halbleitervorrichtung (31) parallelgeschaltet ist.

4. Induktiv gekoppelter Leistungsübertragungsempfänger nach Anspruch 1, wobei die erste variable Impedanz (30, 31, 32) eine zweite Kapazität beinhaltet, die mit der ersten Halbleitervorrichtung (31) parallelgeschaltet ist.

5. Induktiv gekoppelter Leistungsübertragungsempfänger nach Anspruch 1, wobei die erste variable Impedanz (30, 31, 32) eine Kapazität und einen Induktor parallel mit der ersten Halbleitervorrichtung (31) beinhaltet.

6. Induktiv gekoppelter Leistungsübertragungsempfänger nach irgendeinem der vorhergehenden Ansprüche, einschließlich einer oder mehrerer variabler Hilfsimpedanzen.

7. Induktiv gekoppelter Leistungsübertragungsempfänger nach Anspruch 6, wobei eine der variablen Hilfsimpedanzen einen Halbleiterschalter beinhaltet, der durch die Leistungsversorgungsschaltung (28) gesteuert wird.

8. Induktiv gekoppelter Leistungsübertragungsempfänger nach Anspruch 7, wobei der Halbleiterschalter in einem geschalteten Modus betrieben wird.

9. Induktiv gekoppelter Leistungsübertragungsempfänger nach Anspruch 6, einschließlich einer Vielzahl variabler Hilfsimpedanzen.

10. Induktiv gekoppelter Leistungsübertragungsempfänger nach Anspruch 9, wobei jede variable Hilfsimpedanz einen Halbleiterschalter beinhaltet, der in einem geschalteten Modus betrieben wird.

11. Induktiv gekoppelter Leistungsübertragungsempfänger nach Anspruch 10, wobei die Vielzahl variabler Hilfsimpedanzen Kapazitäten mit unterschiedlichen Werten beinhaltet.

12. Induktiv gekoppelter Leistungsübertragungsempfänger nach Anspruch 10, wobei die Vielzahl variabler Hilfsimpedanzen Kapazitäten mit progressiv kleineren Größenordnungen von 1/2ⁿ beinhaltet, wobei n die Anzahl variabler Hilfsimpedanzen ist.

13. Induktiv gekoppelter Leistungsübertragungsempfänger nach irgendeinem der vorhergehenden Ansprüche, wobei die Leistungsversorgungsschaltung (12) eine Rückkopplungssteuerschaltung zum Steuern des Betriebs der einen oder der mehreren Halbleitervorrichtungen umfasst.

## Revendications

1. Un récepteur de transfert d'énergie à couplage inductif comprenant :
a. un circuit accordable comprenant :
i. une combinaison en parallèle (24, 30, 31, 32) d'une bobine de réception d'énergie (24) ; et d'une première impédance variable (30, 31, 32), la première impédance variable (30, 31, 32) étant configurée pour accorder la bobine de réception d'énergie (24), la première impédance variable (30, 31, 32) comprenant :
1. au moins un élément réactif (32) ; et
2. un ou plusieurs composants semi-conducteurs (31) pour contrôler l'impédance effective du au moins un élément réactif (32) en faisant ainsi varier l'impédance de la première impédance variable (30, 31, 32),
la première impédance variable (30, 31, 32) comprenant une seconde capacité (30), la seconde capacité (30) étant montée en série avec un premier des un ou plusieurs composants semi-conducteurs (31), et le premier des un ou plusieurs composants semi-conducteurs (31) fonctionnant en mode linéaire ; et
ii. une première capacité (25) montée en série avec la combinaison parallèle (24, 30, 31, 32) ; et
b. un circuit d'alimentation en énergie (28) qui régule l'énergie délivrée à une sortie du circuit de délivrance d'énergie (28) par contrôle du fonctionnement des un ou plusieurs composants semi-conducteurs (31).

2. Un récepteur de transfert d'énergie à couplage inductif tel que revendiqué dans la revendication 1, dans lequel la seconde capacité (30) est plus faible que la première capacité (25).

3. Un récepteur de transfert d'énergie à couplage inductif tel que revendiqué dans la revendication 1, dans lequel la première impédance variable (30, 31, 32) comprend une inductance en parallèle avec le premier composant semi-conducteur (31).

4. Un récepteur de transfert d'énergie à couplage inductif tel que revendiqué dans la revendication 1, dans lequel la première impédance variable (30, 31, 32) comprend une seconde capacité en parallèle avec le premier composant semi-conducteur (31).

5. Un récepteur de transfert d'énergie à couplage inductif tel que revendiqué dans la revendication 1, dans lequel la première impédance variable (30, 31, 32) comprend une capacité et une inductance en parallèle avec le premier composant semi-conducteur (31).

6. Un récepteur de transfert d'énergie à couplage inductif tel que revendiqué dans l'une des revendications précédentes, comprenant une ou plusieurs impédances variables auxiliaires.

7. Un récepteur de transfert d'énergie à couplage inductif tel que revendiqué dans la revendication 6, dans lequel l'une des impédances variables auxiliaires comprend un commutateur à semi-conducteur contrôlé par le circuit d'alimentation en énergie (28).

8. Un récepteur de transfert d'énergie à couplage inductif tel que revendiqué dans la revendication 7, dans lequel le commutateur à semi-conducteur opère en mode commuté.

9. Un récepteur de transfert d'énergie à couplage inductif tel que revendiqué dans la revendication 6, comprenant une pluralité d'impédances variables auxiliaires.

10. Un récepteur de transfert d'énergie à couplage inductif tel que revendiqué dans la revendication 9, dans lequel chaque impédance variable auxiliaire comprend un commutateur à semi-conducteur opérant en mode commuté.

11. Un récepteur de transfert d'énergie à couplage inductif tel que revendiqué dans la revendication 10, dans lequel la pluralité d'impédances variables auxiliaires comprend des capacités de valeurs différentes.

12. Un récepteur de transfert d'énergie à couplage inductif tel que revendiqué dans la revendication 10, dans lequel la pluralité d'impédances variables auxiliaires comprend des capacités avec des valeurs allant en se réduisant progressivement de 1/2ⁿ, n étant le nombre d'impédances variables auxiliaires.

13. Un récepteur de transfert d'énergie à couplage inductif tel que revendiqué dans l'une des revendications précédentes, dans lequel le circuit d'alimentation en énergie (12) comprend un circuit de contrôle de rétroaction pour contrôler le fonctionnement des un ou plusieurs composants semi-conducteurs.
